# EUROPÄISCHE PATENTSCHRIFT

(11) **EP 4 151 895 B1**
(45) Veröffentlichungstag und Bekanntmachung des Hinweises auf die Patenterteilung: **10.12.2025**
(21) Anmeldenummer: 22196292.1
(22) Anmeldetag: 19.09.2022
(51) Int. Cl.: F16L 21/06, F16L 21/08, F16L 41/02

(54) **ZUGFESTE ROHRVERBINDUNG**
TENSILE STRENGTH PIPE COUPLING
RACCORD DE TUYAUX RÉSISTANT À LA TRACTION

(30) Priorität: 18.09.2021 DE 202021105049 U; 18.09.2021 DE 202021105048 U; 28.04.2022 DE 202022102315 U; 28.04.2022 DE 202022102311 U; 28.04.2022 DE 202022102316 U; 28.04.2022 DE 202022102317 U
(43) Veröffentlichungstag der Anmeldung: 22.03.2023
(60) Teilanmeldung: 23215242.1
(73) Patentinhaber: Funke Kunststoffe GmbH, 59071 Hamm-Uentrop (DE)
(72) Erfinder: Funke, Norbert, 48324 Sendenhorst (DE); Funke, Hans Günther, 48324 Sendenhorst (DE)
(74) Vertreter: Patentanwälte Olbricht Buchhold Keulertz

(56) Entgegenhaltungen:
- EP-A1- 0 175 169
- EP-A2- 2 218 956
- WO-A2-2012/149010
- US-A1- 2018 216 772

## Beschreibung

Die Erfindung betrifft eine zugfeste Rohrverbindung nach dem Oberbegriff des Anspruchs 1.

Die EP 2 218 956 A2 und die WO 2012/149010 A2 bilden den am nächsten kommenden Stand der Technik. Aus der EP 2 218 956 A2 ist eine Rohrverbindung bekannt, bei welcher der Haltering einer Rohrverbindungsvorrichtung einen Eindrückabschnitt aufweist, der ohne die Rohroberfläche zu verletzen in die Wandung eines der Rohre der Rohrverbindung eindrückbar ist, um die Rohrverbindungsvorrichtung verschiebesicher an dem Rohr festzulegen. Aus der WO 2012/149010 A2 ist eine Rohrverbindung bekannt, bei welcher in den Haltering eingelegte Keilelemente Zähne aufweisen, die in die Rohroberfläche eindringen.

Auch die EP 0 175 169 A1 und die US 2018/0216772 A1 zeigen zugfeste Rohrverbindungen, bei denen jeweils ein Haltering eine Wulst am Muffenende eines Rohrs übergreift und sich bis auf das andere Rohr erstreckt.

Der Erfindung liegt die Aufgabe zugrunde, eine gattungsgemäße Rohrverbindung dahingehend zu verbessern, dass eine besonders zuverlässige Zugfestigkeit mit technisch einfachen und preisgünstigen Mitteln ermöglicht ist.

Diese Aufgabe wird durch eine zugfeste Rohrverbindung nach Anspruch 1 gelöst. Vorteilhafte Ausgestaltungen sind in den Unteransprüchen beschrieben.

Merkmale der Erfindung werden nachfolgend beschrieben. Diese Gestaltungsmerkmale können im Zusammenhang mit der Erfindung verwirklicht werden oder auch unabhängig von der Erfindung eigenständig erfinderisch sein, und sie können entweder einzeln und unabhängig voneinander oder auch in einer beliebigen Kombination verwirklicht werden, einschließlich der Verwirklichung sämtlicher genannter Merkmale, sofern eine Kombination nicht ausdrücklich oder technisch zwingend ausgeschlossen ist.

Die Erfindung schlägt vor, die Wirkung der Haltekralle dadurch zu verbessern, dass ein punktueller, auf die Haltekralle einwirkender Druck erzeugt wird. Der Haltering ist aus wenigstens zwei Teilringen gebildet, die sich jeweils über einen Teilumfang des Halterings erstrecken. Zwei benachbarte Teilringe sind durch Spannmittel miteinander verbunden, so dass ihr Abstand zueinander veränderlich ist. Die Haltekralle weist erfindungsgemäß ein Gewinde auf. Dementsprechend können Schrauben, passend abgelängte Stücke von Gewindestangen oder dergleichen verwendet werden. Die mit einem Gewinde versehene Haltekralle erstreckt sich in axialer Richtung des ersten Rohrs, so dass die einzelnen Gewindegänge Krallen bilden, die quer zur Längsrichtung des Rohrs verlaufen und dementsprechend eine Absicherung gegen abziehende Kräfte, also gegen eine Bewegung des Rohrs in seiner Längsrichtung bewirken, die das erste Rohr von dem zweiten Rohr abzuziehen bestrebt sind. Wenn Schrauben als Haltekrallen verwendet werden, können diese beispielsweise schräg in den Krallenabschnitt eingesetzt sein, so dass nicht der Schraubenkopf, sondern vielmehr das Gewinde radial nach innen übersteht und mit dem ersten Rohr zusammenwirken kann. Wenn jedoch der Schraubenkopf ebenfalls eine schmale Kante bildet, wie dies beispielsweise bei Senkkopfschrauben der Fall ist, kann die Schrägstellung der Schraube so gewählt sein, dass sowohl die umlaufende äußere Kante des Schraubenkopfes als auch ein Abschnitt des Gewindes über die innere Oberfläche des Krallenabschnitts radial nach innen ragt.

Beispielsweise kann die Haltekralle als Madenschraube ausgestaltet sein, so dass der Krallenabschnitt nicht an die Aufnahme eines Schraubenkopfes angepasst sein muss und dementsprechend konstruktiv einfach sowie preisgünstig hergestellt werden kann. Die Madenschrauben weisen an einem Ende einen Kraftangriff auf, beispielsweise in Form eines Schlitzes, eines Kreuzschlitzes, eines Innensechskants oder dergleichen, und am gegenüberliegenden Ende weisen sie typischerweise eine Spitze auf. Durch entsprechende Bemaßung einer Ausnehmung, die in Form eines Fensters oder einer Mulde in dem Krallenabschnitt des Halterings angeordnet ist und zur Aufnahme der Haltekralle dient, kann eine einfache Befestigung der Madenschraube im Haltering erreicht werden. Die Ausnehmung kann so kurz bemessen sein, dass die Madenschraube mit ihrer Spitze in den Werkstoff des Krallenabschnitts eingedrückt wird und erst dann mit ihrem gegenüberliegenden Ende endgültig in die Ausnehmung eingeführt werden kann. Hierdurch ist die Madenschraube ohne Verwendung zusätzlicher Mittel, beispielsweise Klebstoff, einer Halteklammer oder dergleichen in der Ausnehmung gehalten, so dass sie bis zur Montage des Halterings an ihrer vorgesehenen Position verbleibt.

In einer Ausgestaltung ist als Spannmittel ein Spannring vorgesehen, der außen um den Krallenabschnitt des Halterings verläuft und bei Verringerung seines Umfangs eine radial nach innen gerichtete Druckwirkung entfaltet. Dadurch, dass diese Druckwirkung insbesondere dort punktuell wirksam wird, wo sich die Haltekralle befindet, wird die Wirksamkeit der Haltekralle verbessert. Wirtschaftlich vorteilhaft können Elemente als Haltekrallen verwendet werden, die nicht eigens als Haltekralle entworfen und hergestellt sind, sondern beispielsweise als Halbzeuge handelsüblich und dementsprechend wirtschaftlich erhältlich sind.

Dementsprechend kann die Haltekralle so ausgestaltet sein, dass sie sich nicht über einen Großteil oder sogar über praktisch den ganzen Umfang des Krallenabschnitts erstreckt, sondern vielmehr lediglich über einen geringen Teilumfang. Auf diese Weise wird nicht nur eine preisgünstige Herstellung der Rohrverbindung durch die Verwendung der erwähnten Halbzeuge unterstützt, sondern da die Haltekralle sich nur über einen geringen Umfangsabschnitt des Krallenabschnitts erstreckt, wird die gewünschte punktuelle Druckwirkung verstärkt, so dass der formschlüssige Eingriff der Haltekralle in die Oberfläche des ersten Rohres besonders zuverlässig sichergestellt werden kann.

Vorteilhaft kann vorgesehen sein, dass nicht nur eine einzige Haltekralle verwendet wird, sondern dass wenigstens zwei, und insbesondere vorteilhaft mehrere Haltekrallen über den Umfang des Krallenabschnitts verteilt angeordnet sind. Auf diese Weise werden zirkumferent möglichst gleiche Haltekräfte erreicht, die das erste Rohr in der Muffe des zweiten Rohres gegen abziehende Kräfte sichern. Aus dem Grund kann vorteilhaft die Anordnung der zwei oder mehr Haltekrallen in der Art vorgesehen sein, dass die Haltekrallen in Art eines gleichmäßigen Musters um den Umfang des Krallenabschnitts verteilt sind, z.B. indem sie gleiche Abstände zueinander aufweisen, symmetrisch oder paarweise angeordnet sind oder dergleichen.

In einer ersten grundsätzlichen Ausgestaltung ist die Haltekralle so ausgestaltet, dass sie in radialer Richtung nach außen über den Krallenabschnitt hinausragt, so dass der Spannring unmittelbar der Haltekralle anliegt und einen unmittelbaren, punktuellen Druck auf die Haltekralle ausübt, der größer ist als an den beiden Stellen, die beiderseits neben der Haltekralle im Umfang des Spannrings liegen. Dabei ist vorteilhaft, dass durch die unmittelbare Einwirkung des Spannring auf die Haltekralle die volle nach innen wirkende Druckkraft, die der Spannring ausübt, unvermindert auf die Haltekralle einwirkt.

In einer zweiten grundsätzlichen Ausgestaltung wird der punktuelle, auf die Haltekralle wirkende Druck nicht unmittelbar, sondern mithilfe eines Druckstücks erreicht, welches zwischen dem Spannring und der Haltekralle angeordnet ist, so dass der Spannring mittelbar auf die Haltekralle einwirkt. Bei dieser zweiten Ausgestaltung ist es nicht erforderlich, dass die Haltekralle nach außen über den Umfang des Krallenabschnitts hinausragt. Vielmehr kann der Krallenabschnitt an seinem äußeren Umfang geschlossen ausgestaltet sein und an seiner inneren Umfangsfläche eine Mulde aufweisen, die radial nach innen offen ist und in die eine Haltekralle eingesetzt werden kann, die über die innere Umfangsfläche des Krallenabschnitts radial nach innen ragt. Hierdurch wird die Herstellung des Halterings vereinfacht, da keine Fenster im Krallenabschnitt erforderlich sind, über die die Haltekralle radial sowohl nach innen als auch nach außen hinausragt. Die Halterung der Haltekralle in dem Krallenabschnitt kann dadurch konstruktiv vereinfacht werden und insbesondere besteht nicht die Gefahr, dass vor der Montage des Halterings eine versehentliche Druckeinwirkung von außen auf die Haltekralle dazu führt, dass die Haltekralle aus dem erwähnten Fenster des Krallenabschnitts herausgedrückt wird und verloren gehen kann.

Das Druckstück kann beispielsweise in einer ersten Variante dieser zweiten grundsätzlichen Ausgestaltung als radial nach innen ragender Vorsprung im Spannring ausgestaltet sein. Selbst wenn der Krallenabschnitt des Halterings außen geschlossen ausgestaltet ist, kann durch das Druckstück punktuell dort Druck auf den Krallenabschnitt ausgeübt werden, wo sich die Haltekralle innerhalb des Krallenabschnitts befindet.

In einer zweiten Variante kann das Druckstück als nach außen ragender Vorsprung des Krallenabschnitts ausgestaltet sein, wobei diese zweite Variante den Vorteil aufweist, dass bei der Anordnung des Spannrings auf dem Krallenabschnitt die Ausrichtung des Spannrings vereinfacht wird, da nicht darauf geachtet zu werden braucht, dass ein am Spannring angeordnetes Druckstück exakt zur Anlage an der Haltekralle ausgerichtet sein muss. Vielmehr liegt der Spannring bei dieser zweiten Variante automatisch dem radial nach außen ragenden Druckstück an.

Die zugfeste Rohrverbindung kann zur Verbindung zweier gleichartiger Rohre dienen, wobei jedes Rohr einerseits ein Spitzende und andererseits ein Muffenende aufweist. In einer Ausgestaltung kann jedoch vorgesehen sein, dass Rohre miteinander verbunden werden, die besonders einfach und preisgünstig hergestellt werden können, indem sie bei der Herstellung nicht mit einem Muffenende versehen werden müssen und die dementsprechend an beiden Enden jeweils ein Spitzende aufweisen. Die Verbindung zweier solcher ersten Rohre erfolgt mithilfe eines Verbindungsbauteils, welches als Doppelmuffe ausgestaltet ist, also als ein zweites Rohr, welches an beiden Enden jeweils eine Muffe aufweist. Diese Doppelmuffe ist typischerweise nicht so lang wie eines der beiden anderen, ersten Rohre. Während die ersten Rohre im Extrusionsverfahren hergestellt werden können, kann die Doppelmuffe als Spritzgussteil hergestellt werden, und um die Formkosten für die Spritzgussform möglichst gering zu halten, kann die Doppelmuffe eine Länge aufweisen, die im Bereich eines oder weniger Dezimeter liegt. Die Ausgestaltung als Spritzgussteil ermöglicht eine präzise Ausgestaltung der umlaufenden Wulst mit geringen Übergangsradien, also eine Ausgestaltung der Wulst mit einem möglichst eckigen Querschnitt. Hierdurch wird eine besonders zuverlässige formschlüssige Festlegung des Halterings an dem zweiten Rohr ermöglicht, da aufgrund dieser präzisen und nahezu eckigen Ausgestaltung der Wulst hohe Rückhaltekräfte erreicht werden und auch beim Aufbringen hoher abziehender Kräfte der Haltering nicht über die Wulst gezogen werden kann, wie dies bei einer Wulst mit einer stark verrundeten Querschnittskontur ansonsten nicht auszuschließen wäre.

Der Haltering übergreift die Wulst des zweiten Rohrs in der Art, dass der Haltering auf dem zweiten Rohr gegen abziehende Kräfte gesichert ist, also gegen Kräfte gesichert ist, die den Haltering von dem zweiten Rohr abzuziehen bestrebt sind. Von dem Ende des zweiten Rohrs her betrachtet, aus dem das erste Rohr herausragt, hintergreift der Haltering also die Wulst des zweiten Rohrs. In einer Ausgestaltung kann vorgesehen sein, dass der Haltering jedoch nicht nur gegen abziehende, sondern auch gegen aufschiebende Kräfte gesichert ist und dementsprechend in beiden axialen Richtungen mithilfe der Wulst formschlüssig verschiebesicher an dem zweiten Rohr festgelegt ist. Dadurch ist gewährleistet, dass Bewegungen verhindert werden, mit denen der Haltering gelockert werden kann, so dass ein möglichst stabiler Zusammenhalt sämtlicher Komponenten der Rohrverbindung gewährleistet werden kann.

Der Haltering ist in einer Ausgestaltung entlang seines Umfangs in Segmente unterteilt, die als Teilringe bezeichnet sind und sich jeweils um einen Umfangsabschnitt des ersten Rohrs und des zweiten Rohres erstrecken. Der Haltering ist aus Teilringen zusammengesetzt, die jeweils einen Bogen als Kreisabschnitt beschreiben, wobei die Teilringe gemeinsam den vollständigen Haltering bilden. Die Teilringe können in einer Ausgestaltung zusammen einen Kreisbogen von weniger als 360° beschreiben, so dass bei einem aus zwei Teilringen bestehenden Haltering dementsprechend jeder Teilring einen Bogen von etwas weniger als 180° beschreibt. So ermöglichen die Teilringe eine maximal wirksame Spannung, mit welcher sie auf dem ersten und dem zweiten Rohr festgelegt werden können, ohne dass der Aufbau einer solchen Spannung dadurch verhindert wird, dass die Teilringe aneinanderstoßen.

Dadurch, dass der Haltering in Teilringe aufgeteilt ist, ist auch die Halterippe auf mehrere nach innen ragende Halterippenabschnitte aufgeteilt, da jeder Teilring wenigstens einen eigenen Halterippenabschnitt aufweist, sodass die Teilringe des Halterings im Vergleich zum vorbekannten Haltering im Wesentlichen keine funktionalen Unterschiede aufweisen, wodurch die Handhabbarkeit vereinfacht und eine Fehleranfälligkeit verringert wird.

In einer Ausgestaltung weist nicht jedes Teilstück eine Halterippe auf, so dass Teilstücke ohne Halterippe zwischen Teilstücken eingefügt werden können, die jeweils eine Halterippe aufweisen, so dass die Wirkung der Halterippe auf Umfangsabschnitte des Halterings begrenzt werden kann, in denen sie besonders erforderlich ist, während in einem oder mehreren anderen Umfangsabschnitten eine möglichst flache Ausgestaltung des Halterings in radialer Richtung erreicht werden kann, um z. B. dessen Montage in einem Abzweig zu erleichtern oder in besonders engen Zwickeln von Rohrabzweigen zu ermöglichen.

Die Teilringe liegen zunächst in einer vormontierten Anordnung vor. In einer Ausgestaltung der vormontierten Anordnung können sämtliche Teilringe völlig getrennt voneinander angeordnet sein und lediglich bereits mit Spannmitteln bestückt sein, z. B. mit exzenter-Spannmitteln oder mit Schrauben einerseits und Muttern andererseits, so dass die Spannmittel nicht als Einzelteile gehandhabt zu werden brauchen. Die voneinander getrennten Teilringe ermöglichen es, den Haltering um eine bereits vorhandene Rohrverbindung einer bereits verlegten Rohrleitung anzuordnen und dann miteinander zu verbinden, z.B. durch Schrauben, um einen geschlossenen Haltering zu schaffen.

In einer anderen Ausgestaltung der vormontierten Anordnung kann vorgesehen sein, an nur einer einzigen Trennstelle die Teilringe durch Spannmittel miteinander zu verbinden, während sie an der einen oder den mehreren anderen Trennstellen einen unveränderlichen Abstand zueinander aufweisen und z. B. gelenkig miteinander verbunden sein können. Um den Druck, den der Haltering auf das Rohr ausübt, möglichst gleichmäßig am Umfang zu verteilen, können in einer anderen Ausgestaltung an sämtlichen Trennstellen die dort benachbarten Teilringe durch Spannmittel miteinander verbunden sein, so dass an jeder Trennstelle der Abstand der Teilringe verändert werden kann.

In einer Ausgestaltung der vormontierten Anordnung können aber auch sämtliche Teilringe bereits miteinander verbunden sein und einen ersten Abstand zueinander aufweisen, so dass die Teilringe einen geschlossenen Ring bilden, wobei die Lücken zwischen den Teilringen als der erwähnte erste Abstand vergleichsweise groß sind. Dadurch, dass die Teilringe auch bereits in ihrer Vormontierten Anordnung zusammenhängen, wird die Handhabung erleichtert. Insbesondere werden Arbeiten vor Ort auf der Baustelle beschleunigt im Vergleich dazu, die Teilringe separat handhaben und nach ihrer Anordnung auf einem Rohr zu dem Haltering zusammenfügen zu müssen. Der sogenannte erste Abstand zwischen den vormontierten Teilringen ist dabei so groß, dass sie in der vormontierten Anordnung über die Wulst des zweiten Rohrs geführt werden können. Die nach innen ragenden Halterippenabschnitte sind dementsprechend weit voneinander beabstandet. Durch die Unterteilung des Halterings entlang seines Umfangs in Segmente bzw. Teilringe wird eine Montage des Halterings auch dann noch ermöglicht, wenn die Rohrverbindung ein Aufschieben des Halterings in axialer Richtung erschwert oder unmöglich macht, beispielsweise nachdem das Spitzende des ersten Rohrs bereits in das Muffenende des zweiten Rohrs gesteckt wurde, wie dies beispielsweise bei bereits verlegten Rohrleitungen der Fall ist. Infolgedessen können mit dem mehrteiligen Haltering in wirtschaftlich vorteilhafter Weise bereits bestehende Rohrverbindungen im Bedarfsfall nachträglich ertüchtigt werden gegen abziehende Kräfte.

In einer Ausgestaltung sind die Teilringe an nur einer einzigen Trennstelle durch Spannmittel miteinander verbunden, während sie an der einen oder den mehreren anderen Trennstellen einen unveränderlichen Abstand zueinander aufweisen und z. B. gelenkig miteinander verbunden sein können. Um den Druck, den der Haltering auf das Rohr ausübt, möglichst gleichmäßig am Umfang zu verteilen, können in einer anderen Ausgestaltung an sämtlichen Trennstellen die dort benachbarten Teilringe durch Spannmittel miteinander verbunden sein, so dass an jeder Trennstelle der Abstand der Teilringe verändert werden kann.

Unabhängig davon, ob die Teilringe in ihrer vormontierten Anordnung voneinander getrennt oder bereits miteinander verbunden sind, können sie aus der vormontierten Anordnung, die als erste Anordnung der Teilringe bezeichnet wird, in eine zweite Anordnung bewegt werden, die als montierte Anordnung bezeichnet ist und in welcher sie einen zweiten Abstand zueinander aufweisen, der geringer ist als der erste Abstand. Der Haltering weist dann einen Umfang auf, der kleiner ist als der Umfang in der ersten, vormontierten Anordnung, und der daran angepasst ist, dass in der montierten, zweiten Anordnung eine Halterippe, welche die Wulst des zweiten Rohrs hintergreift, einen formschlüssigen Halt des Halterings auf dem zweiten Rohr bewirkt, der den Haltering gegen abziehende Kräfte auf dem zweiten Rohr sichert. Die nach innen ragenden Halterippenabschnitte sind dementsprechend weniger weit voneinander beabstandet als in der ersten Anordnung des Halterings, so dass sie die Wulst des zweiten Rohrs hintergreifen. Die Teilringe werden in der zweiten Anordnung durch Spannmittel zusammengehalten, beispielsweise indem die Teilringe miteinander verschraubt sind, so dass der Durchmesser des montierten Halterings und der Halterippe nicht unerwünscht erweitert werden kann.

Die Halterippe weist, wenn die Teilringe sich in ihrer montierten Anordnung befinden und entweder annähernd oder sogar tatsächlich einander anliegen, keine kreisförmige Innenkontur auf. Vielmehr erstrecken sich die Halterippenabschnitte jeweils unterschiedlich weit radial nach innen, so dass sie eine gemeinsame, von einem Kreisrund abweichende Innenkontur schaffen. An den jeweiligen Enden der Halterippenabschnitte, wo ein Teilring einem anderen Teilring benachbart ist, weist der Haltering einen größeren Innendurchmesser auf als im umfangsmäßigen Abstand von diesem Ende.

Durch diese vom Kreisrund abweichende Innenkontur der Halterippe wird bereits nach einer vergleichsweise geringen Vergrößerung des Abstands zwischen den Teilringen ermöglicht, den Haltering in axialer Richtung von dem zweiten Rohr abzuziehen bzw. in axialer Richtung auf das zweite Rohr und über dessen umlaufende Wulst aufzuschieben. Die Spannmittel, mit denen die Teilringe zusammengehalten werden, können also mit einem vergleichsweise geringen Verstellbereich die Bewegung der Teilringe zwischen ihrer vormontierten und ihrer montierten Anordnung ermöglichen. Dieser vergleichsweise geringe erforderliche Verstellweg der Teilringe gibt für die Konstruktion des Halterings größere konstruktive Freiheiten, was die Ausgestaltung der Spannmittel angeht, so dass beispielsweise Exzenter-Spannmittel verwendet werden können, die im Vergleich zu anderen Spannmitteln einen vergleichsweise kleinen Verstellbereich aufweisen. Wenn jedoch Schrauben als Spannmittel verwendet werden, um die Teilringe ähnlich wie die Elemente einer Rohrschelle miteinander zu verbinden, so kann die Betätigung der Schraube bereits mit vergleichsweise wenigen Umdrehungen die Bewegung der Teilringe zwischen ihrer vormontierten und ihrer montierten Anordnung bewirken, so dass dem Anwender die Handhabung bei der Herstellung der Rohrverbindung erleichtert wird und die Herstellung der Rohrverbindung einschließlich montiertem Haltering auch in kürzerer Zeit ermöglicht wird.

In einer Ausgestaltung kann der Haltering aus lediglich zwei Teilringen bestehen. Dies erleichtert die Handhabung des Halterings in der vormontierten Anordnung, denn entweder müssen die einzelnen Teilringe einzeln gehandhabt werden, was mit einer geringeren Anzahl einfacher möglich ist als mit einer größeren Anzahl, oder die Teilringe sind auch bereits in der vormontierten Anordnung miteinander verbunden, vergleichsweise locker und dementsprechend beweglich, so dass auch in diesem Fall eine geringere Anzahl an Teilringen deren korrekte Ausrichtung auf dem zweiten Rohr erleichtert, bevor die Spannmittel gespannt werden können.

In einer Ausgestaltung sind die Spannmittel als Verschraubungen ausgestaltet. Dies ermöglicht die Verwendung sehr preisgünstiger Bauteile, zudem ist für die Betätigung der Verschraubung an praktisch jeder Baustelle das geeignete Werkzeug standardmäßig verfügbar, so dass die Betätigung der Spannmittel problemlos sichergestellt ist und häufig mit motorischen Hilfsmitteln wie zum Beispiel einem Akkuschrauber für den Anwender besonders einfach ist. Wenn, wie dies in der Praxis häufig der Fall ist, sich bei dem erwähnten Akkuschrauber ein bestimmtes Anzugsmoment festlegen lässt, kann auf besonders einfache Weise sichergestellt werden, dass die Spannmittel mit der vorgesehenen Spannkraft wirken, so dass die korrekte Montage des Halterings auf besonders einfache Weise gewährleistet werden kann.

Der Haltering erstreckt sich über eine bestimmte axiale Länge. Die Haltekralle ist an einer bestimmten Stelle dieser axialen Länge am Umfang des Halterings vorgesehen. Spannmittel können dort angeordnet sein, wo sich am Umfang des Halterings die Haltekralle befindet. Auf diese Weise ist sichergestellt, dass die Haltekralle an das erste Rohr angepresst wird und in die Oberfläche des ersten Rohrs eindringen kann, um die gewünschte Sicherung gegen eine Längsbeweglichkeit des ersten Rohrs in Bezug auf den Haltering zu bewirken.

Aus einer ähnlichen Überlegung kann vorgesehen sein, dass Spannmittel in axialer Richtung an dem Haltering in dem Bereich angeordnet sind, wo am Umfang des Halterings die Halterippe verläuft. Wenn beispielsweise vorgesehen ist, dass auch an der Außenseite des Halterings dort, wo die Halterippe nach innen ragt, eine Aussteifungsrippe nach außen ragt, können die Spannmittel in axialer Richtung geringfügig versetzt angeordnet sein, um die äußere Aussteifungsrippe nicht zu unterbrechen. Sie befinden sich trotz dieses geringfügigen axialen Versatzes in dem Bereich, in welchem die Spannkraft auf die Halterippe in der Art wirkt, dass sie einer unerwünschten Aufweitung der Halterippe entgegenwirkt.

Es kann daher vorteilhaft vorgesehen sein, in axialer Richtung zwei oder mehr Spannmittel hintereinander anzuordnen, so dass die beiden vorgenannten Auswirkungen auf die Haltekralle und auf die Halterippe erzielt werden können.

In einer Ausgestaltung ist am Umfang des Halterings eine Unterbrechung vorhanden, so dass der Haltering sich im Bereich dieser Unterbrechung radial nicht so weit nach außen erstreckt wie in seinem übrigen, unterbrechungsfreien Umfangsbereich. Beispielsweise kann sich der Haltering in axialer Richtung unterschiedlich weit erstrecken, so dass er an einem axialen Ende eine Unterbrechung aufweist, die auch als Einkerbung, Aussparung oder Einschnürung bezeichnet werden kann und an diesem axialen Ende dafür sorgt, dass die Ausdehnung des Halterings in radialer Richtung verringert ist, verglichen mit den benachbarten Umfangsbereichen an demselben axialen Ende des Halterings. Der vorschlagsgemäße Haltering kann zur Herstellung einer geradlinigen Verbindung zweier Rohre verwendet werden, so dass er als Standard-Bauelement für die Herstellung von Rohrverbindungen genutzt werden kann. Die Unterbrechung erweist sich insbesondere bei der Verwendung des Halterings zur Montage an Abzweigen als besonders vorteilhaft.

Im Bereich von Abzweigen, wo Rohrleitungen beispielsweise annähernd Y-förmig aufeinandertreffen, verläuft üblicherweise eine Rohrleitung geradlinig durchgehend, und eine zweite Rohrleitung schließt in einem bestimmten Winkel an diese geradlinige Rohrleitung an. Zwischen den beiden Rohrleitungen ergibt sich daher ein Zwickel, der je nach dem Anschlusswinkel der zweiten Rohrleitung einen sehr gering bemessenen Einbauraum für die Montage von Halteringen zur Verfügung stellt. Ein vorschlagsgemäßer Haltering kann hinsichtlich seiner Drehwinkelstellung so montiert werden, dass die Unterbrechung zu der jeweils anderen Rohrleitung weist. Im Bereich der Unterbrechung nimmt der Haltering in radialer Richtung weniger Raum ein als in seinem übrigen Umfangsbereich, so dass dementsprechend im Bereich der Unterbrechung ein größerer Einbauraum für den zweiten Haltering innerhalb des erwähnten Zwickels verbleibt. Der zweite Haltering kann daher so montiert werden, dass er den ersten, vorschlagsgemäß ausgestalteten Haltering im Bereich von dessen Unterbrechung durchdringt. Als Durchdringung wird in diesem Zusammenhang bezeichnet, dass bei einer gedachten Weiterführung der Kontur über den gesamten Umfang des Halterings die Unterbrechung eine Fehlstelle innerhalb dieser Kontur darstellt, und dass der zweite Haltering im Bereich dieser Fehlstellung in die gedachte, weitergeführte umlaufende Kontur des ersten Halterings eindringt.

Ggf. kann nicht nur ein einziger Haltering, der in einem Abzweig montiert ist, eine Unterbrechung aufweisen, sondern es können die beiden Halteringe, die beiderseits des Zwickels verbaut werden, jeweils eine Unterbrechung aufweisen. So wird ermöglicht, dass sich beide Halteringe jeweils im Bereich ihrer jeweiligen Unterbrechung durchdringen können und auf diese Weise auch unter besonders beengten räumlichen Verhältnissen problemlos montiert werden können.

Die Spannmittel des Halterings können in einer Ausgestaltung als Schrauben ausgestaltet sein, was eine unkomplizierte Handhabung an der Baustelle ermöglicht. Durch die Länge und somit den Verstellweg der Schrauben kann auf einfache Weise die maximale Durchmesser-Änderung des Halterings bestimmt werden, die möglich ist, ohne die Schrauben komplett von ihren jeweils zugeordneten Muttern zu lösen. Die Schrauben nicht komplett zu lösen ist insofern vorteilhaft, als bei der Montage des Halterings keine losen Teile gehandhabt zu werden brauchen, die verloren gehen könnten und in einem Erdgraben, einem Schacht oder dergleichen nur schwierig oder gar nicht aufzufinden wären, was die Montagearbeiten erheblich verzögern könnte. Einen dementsprechend geschlossenen Haltering zu verwenden, dessen Teilringe einen ersten, vergleichsweise großen Abstand zueinander aufweisen, erleichtert die Montage des Halterings, da nicht erst zwei Teilringe an einer Trennstelle zusammengefügt werden müssen, z. B. Schrauben in die zugeordneten Muttern eingeführt werden müssen. Die Verwendung eines geschlossenen Halterings ist stets dann möglich, wenn die Rohrverbindung in axialer Richtung zugänglich ist und ein Haltering in axialer Richtung aufgeschoben und bis zur gewünschten Montagestelle verschoben werden kann.

In einer Ausgestaltung weist der Haltering entlang seines Umfangs nicht nur eine einzige Unterbrechung auf, sondern vielmehr zwei Unterbrechungen in der Halterippe und der Mantelfläche, wobei die beiden Unterbrechungen des Halterings entlang seines Umfangs in einem Abstand voneinander angeordnet sind. Bei der beschriebenen Anordnung des Halterings im Zwickel eines Rohr-Abzweigs ist nur eine einzige Unterbrechung erforderlich, nämlich nur in dem Umfangsbereich des Halterings, welcher zu der zweiten Rohrleitung gewandt ist. Dennoch zwei Unterbrechungen in dem Haltering vorzusehen, bietet bei der Montage die Möglichkeit, den Haltering in zwei unterschiedlichen Drehwinkelstellungen auszurichten. Auf diese Weise kann auch in den unterschiedlichsten Einbausituationen eine gute Zugänglichkeit zu den Spannmitteln gewährleistet werden.

Bei der Schaffung eines Rohr-Abzweigs kann beispielsweise ein Formteil Verwendung finden, welches im wesentlichen Y-förmig ausgestaltet ist und gemäß einer praxisüblichen, weit verbreiteten Ausgestaltung einen ersten, geradlinig durchgehenden Rohrleitungsabschnitt aufweist sowie einen zweiten Rohrleitungsabschnitt, der in einem bestimmten Winkel in den ersten Rohrleitungsabschnitt mündet. An dem ersten, durchgehenden Rohrleitungsabschnitt kann ein Ende als Spitzende ausgestaltet sein und das gegenüberliegende Ende als Muffenende, welches die umlaufende Wulst aufweist. Auch der zweite, abzweigende Rohrleitungsabschnitt weist ein Muffenende mit einer umlaufenden Wulst auf.

Der bislang erwähnte Dichtungsring, der sich über beide Rohre der Rohrverbindung erstreckt, dient der Abdichtung der beiden Rohre untereinander. Eine jeweilige weitere Dichtung kann zwischen dem Haltering und einer äußeren Oberfläche des ersten und / oder des zweiten Rohrs vorgesehen sein, beispielsweise um das Eindringen von Wurzeln zwischen den Haltering und die Rohre zu verhindern. Diese zusätzliche Dichtung kann als O-Ring oder als Profildichtungsring mit einer bestimmten Querschnittsgeometrie ausgestaltet sein oder auch durch eine Dichtungsmasse geschaffen werden, die in einen Spalt oder Hohlraum eingefüllt wird, der zwischen dem Haltering und den Rohren verläuft.

Wenn der Haltering umfangsmäßig in zwei oder mehr Teilringe unterteilt ist und die Verwendung eines geschlossenen Halterings nicht möglich ist, da die Rohrverbindung in axialer Richtung nicht zugänglich ist und der Haltering daher in axialer Richtung nicht aufgeschoben werden kann, muss der Haltering zwischen zwei Teilringen offen sein. Falls die beiden Teilringe durch Spannmittel miteinander verbunden werden und diese als Verschraubungen ausgestaltet sind, kann auch bei dieser offenen Ausgestaltung des vormontierten Halterings vorgesehen sein, dass die Spannmittel verliersicher an den jeweiligen Teilringen gehalten sind, so dass ebenso wie bei einem geschlossenen vormontierten Haltering keine Kleinteile verloren gehen können, die an der Baustelle nur schwer oder gar nicht auffindbar sind und die Arbeiten bei der Herstellung der Rohrverbindung unerwünscht verzögern können.

Zur verliersicheren Halterung der Spannmittel an den jeweiligen Teilringen können die Teilringe Laschen aufweisen, die sich biegen lassen und daher zunächst die Montage der Spannmittel an den Teilringen erlauben und anschließend umgebogen werden, um die Spannmittel zu sichern. Beispielsweise können sich die Laschen in achsparalleler Richtung, bezogen auf eine Schraubachse, zu einer Schraube und zu einer Mutter erstrecken, so dass die Schraube bzw. die Mutter zunächst in dieser axialen Richtung an die gewünschte Position am Haltering gebracht werden kann. Die Schraube kann zunächst provisorisch in ihrer gewünschten Lage fixiert werden, indem sie sich mit ihrem Schaft durch eine entsprechende Bohrung erstreckt. Wenn anschließend die Lasche über den Schraubenkopf gebogen wird, ist die Schraube in dieser Position gesichert.

Wenn sich die Lasche lediglich über den Rand des Schraubenkopfes erstreckt, oder wenn die Lasche eine Öffnung aufweist, ist der Kraftangriff des Schraubenkopfes nach wie vor erreichbar, so dass die mittels der Lasche gehaltene Schraube mit einem entsprechenden Werkzeug angetrieben werden kann. Daher kann insbesondere vorteilhaft vorgesehen sein, dass der Schraubenkopf nicht an seinem Umfang den Kraftangriff aufweist, wie zum Beispiel bei einem Außensechskant, sondern vielmehr einen zentralen Kraftangriff aufweist wie z.B. eine Kreuzschlitz-, Inbus- oder Torx-Geometrie.

Für die zugehörige Mutter bewirkt die Lagefixierung mittels einer umgebogenen Lasche nicht nur, dass die Mutter verliersicher an dem Teilring gehalten ist, sondern die Mutter kann auch gegen eine Verlagerung in axialer Schraubrichtung gesichert werden. Insbesondere kann die Lasche die Mutter zusätzlich auch verdrehsicher festlegen. Dies erleichtert die Montage des Halterings, da lediglich der Schraubenkopf für die Herstellung der Verschraubung zugänglich sein muss und die Mutter nicht gegengehalten werden muss. Beispielsweise kann eine Vertiefung mit 6-eckiger Innenkontur vorgesehen sein, in welcher die Mutter aufgenommen werden kann, so dass auch dann die Mutter zuverlässig gegen eine unerwünschte Verdrehung gesichert ist, wenn hohe Anzugsmomente bei der Verschraubung aufgebracht werden.

Die Laschen können aus unterschiedlichen Werkstoffen bestehen. Metallische Laschen können mechanisch umgebogen werden, beispielsweise mithilfe eines Schraubendrehers, und aus Kunststoff bestehende Laschen können thermisch umgebogen werden, mithilfe eines beheizten Werkzeugs wie zum Beispiel einem Lötkolben, oder sie können verstemmt werden, also mittels eines beheizten Werkzeugs gestaucht werden, so dass sich ihr Querschnitt zu einer angenäherten Pilzform verformt.

Die Teilringe des Halterings können wirtschaftlich vorteilhaft identisch ausgestaltet sein. Falls als Schrauben ausgestaltete Spannmittel vorgesehen sind, kann jeder Teilring an seinen beiden gegenüberliegenden Enden, an die ein weiterer Teilring anschließt, unterschiedlich ausgestaltet sein, wie nachfolgend noch näher erläutert werden wird. Benachbarte Teilringe grenzen mit ihren verschiedenen Enden aneinander. Bei dieser Ausgestaltung eines mehrteiligen Halterings weist der Teilringen vorteilhaft eine geradzahlige Anzahl von Teilringen auf, so dass ohne ein spezielles Zwischenelement zu erfordern sämtliche Teilringe mit ihren beiden verschiedenen Enden stets an ein dazu komplementäres Ende des jeweils benachbarten Teilrings anschließen können.

Beispielsweise kann eines der beiden unterschiedlichen Enden des Teilrings in einer Ausgestaltung zur Bildung einer Kammer dienen, nämlich einen Kragen aufweisen, der zusammen mit der Rohroberfläche und dem benachbarten Teilring einen Aufnahmeraum schafft, durch den sich das Spannmittel zu dem erwähnten benachbarten Teilring erstreckt. Durch diese Kammer wird das Spannmittel beispielsweise vor einer austretenden Dichtmasse geschützt, wenn der Dichtungsring der Rohrverbindung durch eine Vergussmasse geschaffen wird, die in den Hohlraum zwischen Haltering und Rohroberfläche injiziert wird.

Beispielsweise können die beiden unterschiedlichen Enden des Teilrings in einer Ausgestaltung an die verwendeten Spannmittel angepasst sein, beispielsweise um entweder eine Schraube drehbar oder eine Mutter verdrehgesichert aufzunehmen und um gegebenenfalls die erwähnten Laschen zur Sicherung Spannmittel aufzuweisen.

Es kann jedoch vorteilhaft sein, nämlich wenn ein ungehinderter Zugang zu einem Haltering nur von einer Seite her möglich ist, an beiden Enden des Teilrings wahlweise die Anbringung einer Schraube oder einer Mutter zu ermöglichen. Bei einem Haltering, der aus nur zwei Teilringen besteht, ermöglicht dies, an beiden Trennstellen die Schrauben von derselben Seite her einzusetzen, so dass sie problemlos zugänglich sind, um den Haltering zu spannen und von seiner ersten Anordnung in die zweite Anordnung mit verringertem Durchmesser zu bringen. Beispielsweise kann ein Teilring an seinen beiden Enden jeweils eine Vertiefung mit einer 6-kantigen Innenkontur aufweisen, so dass dort wahlweise eine Mutter verdrehsicher aufgenommen werden kann oder ein Schraubenkopf mit einem kreisrunden Umfang drehbar aufgenommen werden kann.

Um eine unerwünschte nachträgliche Manipulation des Halterings zu verhindern, können als Schrauben ausgestaltete Spannmittel unlösbar ausgestaltet sein. Dies kann beispielsweise durch Verwendung sogenannter Abreißschrauben erreicht werden, bei denen der Schraubenkopf bei Erreichen eines vorbestimmten Anzug Moments vom Schaft der Schraube abschert, oder dies kann durch einen asymmetrischen Kraftangriff der Schraube erreicht werden, so dass die Schraube nur angezogen, nicht jedoch losgedreht werden kann.

Ausführungsbeispiele der Erfindung werden anhand der rein schematischen Darstellungen nachfolgend näher erläutert. Dabei zeigt
- Fig. 1: einen Längsschnitt durch eine zugfeste Rohrverbindung, einschließlich eines vergrößerten Ausschnitts,
- Fig. 2: eine Seitenansicht von außen auf die Rohrverbindung von Fig. 1,
- Fig. 3: einen Schnitt entlang der Linie III - III in Fig. 2, einschließlich eines vergrößerten Ausschnitts,
- Fig. 4: einen Längsschnitt durch eine weitere zugfeste Rohrverbindung, einschließlich eines vergrößerten Ausschnitts,
- Fig. 5: eine perspektivische Ansicht auf einen Haltering,
- Fig. 6: einen Längsschnitt durch eine Rohrverbindung, samt einer Ausschnittsvergrößerung,
- Fig. 7: eine seitliche Ansicht von außen auf eine Rohrverbindung samt Haltering,
- Fig. 8: eine seitliche Ansicht von innen auf einen Teilring des Halterings von Fig. 7,
- Fig. 9: eine Ansicht in axialer Richtung auf die Anordnung von Fig. 7,
- Fig. 10 und 11: perspektivische Ansichten aus zwei Richtungen auf den Haltering von Fig. 7, und die
- Fig. 12 bis 14: Ansichten aus verschiedenen Blickrichtungen auf einen Rohrabzweig mit zwei Rohrverbindungen und den jeweiligen Halteringen.

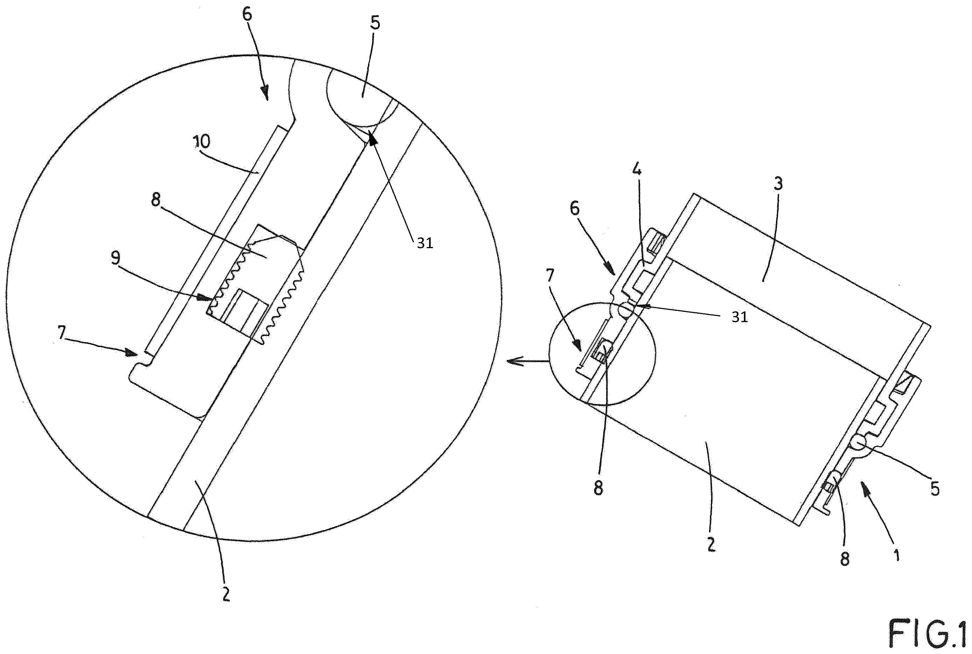

In Fig. 1 ist eine zugfeste Rohrverbindung 1 dargestellt, wobei ein erstes Rohr 2 ein Spitzende aufweist, mit welchem es in ein Muffenende eines zweiten Rohrs 3 eintaucht. Das zweite Rohr 3 weist eine nach außen ragende, umlaufende Wulst 4 auf. In die Wulst 4, die eine radial nach innen offene Sicke bildet, kann ein Dichtungsring eingelegt sein, wie dies von Rohrverbindungen an sich bekannt ist. Um beim Zusammenfügen der Rohre 2 und 3 einen solchen Dichtungsring nicht zu beschädigen, ist das Spitzende typischerweise angeschrägt. Bei dem dargestellten Ausführungsbeispiel wird eine besonders preisgünstige Herstellung des ersten Rohrs 2 dadurch unterstützt, dass dieses möglichst wenig Bearbeitungsschritte erfordert. Das Spitzende des ersten Rohrs 2 ist daher nicht angeschrägt und in der Wulst 4 ist kein Dichtungsring vorgesehen.

Vielmehr ist ein Dichtungsring 5 im Inneren eines Haltering 6 angeordnet, so dass dieser Dichtungsring 5 zusammen mit dem Haltering 6 auf dem ersten Rohr 2 montiert wird. Der Haltering 6 besteht aus mehreren Segmenten, bei dem dargestellten Ausführungsbeispiel aus zwei Segmenten, so dass der Haltering 6 geöffnet werden kann, indem der Abstand zwischen den beiden Segmenten vergrößert wird, und in diesem geöffneten Zustand problemlos über das erste Rohr 2 geführt werden kann. Anschließend werden die beiden Segmente zusammengeführt, so dass der Haltering 6 nun erstens die Wulst 4 des zweiten Rohrs 3 formschlüssig übergreift in beiden axialen Richtungen verschiebesicher an dem zweiten Rohr 3 festgelegt ist. Zweitens liegt der Haltering 6 nun mit einem Krallenabschnitt 7 dem ersten Rohr 2 an. Die beiden Rohre 2 und 3 sowie der Haltering 6 begrenzen einen Hohlraum 31, in dem der Dichtungsring 5 aufgenommen ist.

Mehrere Haltekrallen 8 sind entlang dem Umfang des Haltering 6 verteilt in dem Krallenabschnitt 7 angeordnet. Die Haltekrallen 8 sind jeweils als Madenschraube ausgestaltet und in axialer Richtung ausgerichtet. Sie sind jeweils in einer Mulde 9 des Krallenabschnitts 7 aufgenommen, wobei die Mulde 9 so bemessen ist, dass die Haltekrallen 8 über die innere Oberfläche des Krallenabschnitts 7 hinaus radial nach innen ragen und sich dementsprechend formschlüssig in das erste Rohr 2 krallen. Außen um den Krallenabschnitt 7 verläuft ein Spannring 10, dessen Durchmesser veränderlich ist und der dazu dient, Druck auf die Haltekrallen 8 auszuüben, so dass diese wie in Fig. 1 dargestellt in die Oberfläche des ersten Rohrs 2 eindringen.

Im Gegensatz zu einer Kleb- oder Schweißverbindung wirkt eine Haltekralle 8 einer Auszugsbewegung des ersten Rohrs 2 auch nach einer Überlastung der Rohrverbindung entgegen, nachdem sich die beiden Rohre relativ zueinander bewegt haben, da die Verformbarkeit der Haltekrallen vorteilhafterweise geringer ist als die des ersten Rohrs 2. Die Haltekrallen wirken über den gesamten Weg dem Ausziehen des ersten Rohrs 2 entgegen, sodass es infolge der Auszugsbewegung zu einer Bildung von Riefen in der äußeren Oberfläche des ersten Rohrs 2 käme.

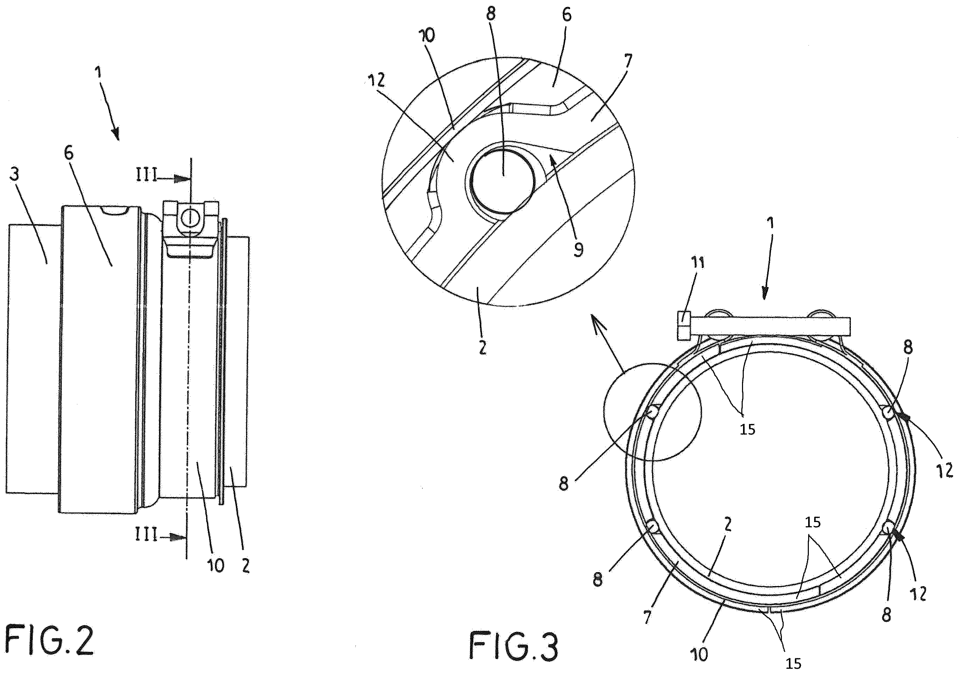

Fig. 2 zeigt eine Seitenansicht auf die Rohrverbindung 1 von Fig. 1.

Fig. 3 zeigt einen Querschnitt durch die Rohrverbindung 1 von Fig. 2 entlang der Linie III - III von Fig. 2. Insgesamt sind vier Haltekrallen 8 über den Umfang des Krallenabschnitts 7 symmetrisch verteilt angeordnet. Der Haltering 6 besteht aus zwei Teilringen 15, deren jeweiligen beiden Enden schräg und nicht koaxial zur Mittelachse der Rohrverbindung 1 verlaufen, so dass die Trennlinien zwischen den beiden Teilringen 15 radial innerhalb und radial außerhalb des Spannrings 10 in Fig. 3 versetzt zueinander erkennbar sind. Der Spannring 10 ist als Spannschelle ausgestaltet, bei welcher eine Spannschraube 11 ermöglicht, den Umfang eines Stahlbandes zu verändern. Insbesondere ist aus Fig. 3, und hier insbesondere aus der lupenartigen Ausschnittsvergrößerung erkennbar, dass der Krallenabschnitt 7 des Halterings 6 radial nach außen ragende Vorsprünge dort bildet, wo sich die Mulden 9 und die darin angeordneten Haltekrallen 8 befinden. Diese Vorsprünge bilden Druckstücke 12, denen der Spannring 10 anliegt. Wenn der Durchmesser des Spannrings 10 verringert wird, wird daher auf die Druckstücke 12 ein lokal begrenzter, quasi punktueller Druck aufgebaut, der größer ist als der Druck, der beiderseits neben den Druckstücken 12 auf den Krallenabschnitt 7 wirkt. Auf diese Weise erfolgt eine besonders intensive Druckübertragung von dem Spannring 10 auf die Haltekrallen 8.

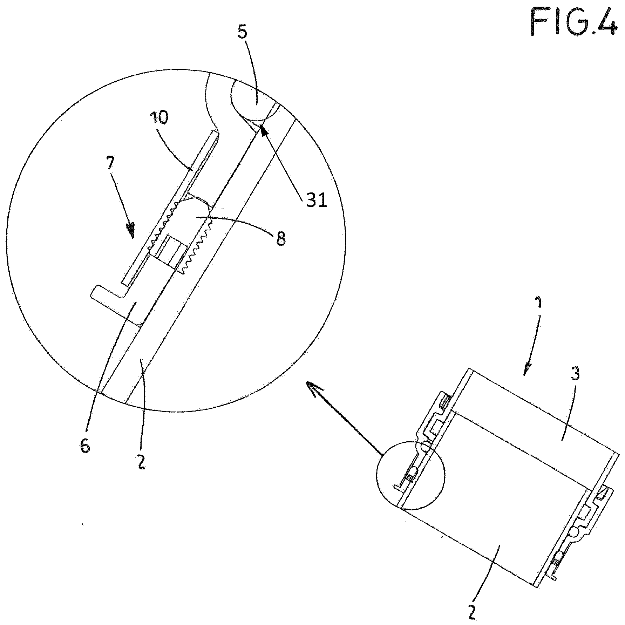

Fig. 4 zeigt ein weiteres Ausführungsbeispiel, bei dem die Haltekralle 8 so ausgestaltet ist, dass sie in radialer Richtung auch nach außen über den Krallenabschnitt 7 hinausragt, so dass der Spannring 10 unmittelbar der Haltekralle 8 anliegt und eine unmittelbare, punktuelle, nach innen wirkende Druckkraft auf die Haltekralle 8 ausübt, die größer ist als die Druckkraft an den Stellen, mit denen der Spannring 10 jeweils neben der Haltekralle 8 dem Umfang des Krallenabschnitts 7 anliegt.

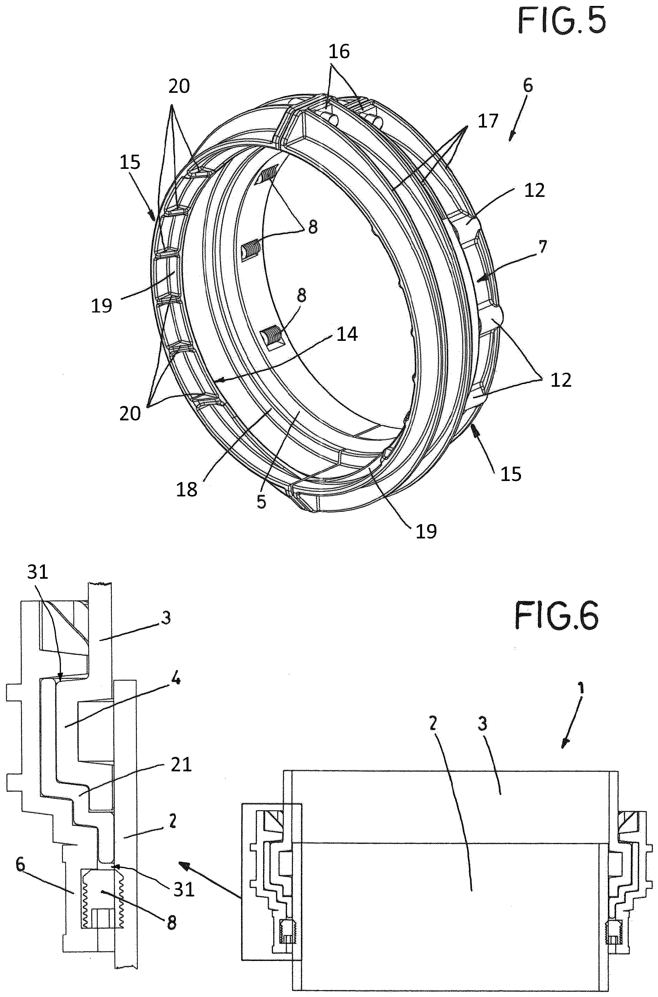

Fig. 5 zeigt einen Haltering 6, der wie bereits erwähnt aus zwei Segmenten besteht, die als Teilringe 15 bezeichnet werden und in Fig. 5 in einer so genannten montierten Anordnung dargestellt sind, in welcher sie einen geringen Abstand zueinander aufweisen. Spannmittel 16 verbinden die beiden Teilringe 15 miteinander halten sie in dem geringen Abstand zueinander. Es ist erkennbar, dass Spannmittel 16 in axialer Richtung jeweils dort an dem Haltering 6 angeordnet sind, wo der Dichtungsring 5 und auch die Haltekrallen 8 liegen, und dass sie in der Nähe, also in dem Bereich liegen, wo eine Halterippe 14 innen verläuft. An der Außenseite des Halterings 6 verlaufen zwei Aussteifungsrippen 17, und um deren Wirkung sicherzustellen und sie nicht zu unterbrechen, sind die Spannmittel 16 in axialer Richtung zwischen den beiden Aussteifungsrippen 17 angeordnet. Durch Betätigung der Spannmittel 16 können diese gelockert werden, so dass der Haltering 6 geöffnet und die Teilringe 15 in eine vormontierte Anordnung gebracht werden können, in welcher der Abstand zwischen den beiden Teilringen 15 größer als in Fig. 5 ist. In diesem vormontierten Zustand kann der Haltering 6 problemlos über das erste Rohr 2 und auch über das zweite Rohr 3, insbesondere auch über dessen Wulst 4 geführt werden.

Anschließend werden die beiden Teilringe 15 zusammengeführt, beispielsweise direkt durch Betätigung der Spannmittel 16, oder auch zunächst manuell und mit anschließender Betätigung der Spannmittel 16. Jedenfalls hintergreift im Ergebnis erstens die Halterippe 14 des Halterings 6 die Wulst 4 des zweiten Rohrs 3, so dass der Haltering 6 auf dem zweiten Rohr 3 gegen abziehende Kräfte gesichert ist. Zweitens liegt der Haltering 6 nun mit dem Krallenabschnitt 7 dem ersten Rohr 2 an und die Haltekrallen 8 dringen in den Werkstoff des ersten Rohrs 2 ein, so dass das erste Rohr 2 seinerseits in axialer Richtung unbeweglich am Haltering 6 festgelegt ist. Da der Krallenabschnitt 7 mit einem Absatz 18 in einen anschließenden Abschnitt des Halterings 6 übergeht und die Wulst 4 des zweiten Rohrs 3 zwischen der Halterippe 14 und dem Absatz 18 verläuft, ist der Haltering 6 formschlüssig in beiden axialen Richtungen verschiebesicher an dem zweiten Rohr 3 festgelegt. Ein Spannring 10 ist in Fig. 5 nicht dargestellt, so dass die Druckstücke 12 von außen sichtbar sind als Begrenzungen der Mulden 9, in denen die Haltekrallen 8 angeordnet sind.

Die Halterippe 14 wird durch zwei Halterippenabschnitte 19 gebildet, wobei in jedem Teilring 15 jeweils ein Halterippenabschnitt 19 angeordnet ist. Die umfangsmäßig verlaufenden Halterippenabschnitte 19 sind jeweils durch mehrere Stützrippen 20 verstärkt, die in axialer Richtung verlaufen. Jeweils zu den Enden des Teilrings 15 hin erweitert sich der Durchmesser der Halterippe 14; die Innenkanten der Halterippenabschnitte 19 verlaufen in diesen Bereichen nach außen und tauchen praktisch in den Umfang des Halterings 6 ein.

Wenn die Spannmittel 16 gelockert werden, können die beiden Teilringe 15 auseinander bewegt werden in ihre vormontierte Anordnung, in welcher sie immer noch durch die Spannmittel 16 zu einem geschlossenen Ring verbunden sind, aber einen größeren Abstand zueinander aufweisen. Wenn dabei jeder der beiden Teilringe 15 so weit nach außen bewegt und von dem jeweils anderen Teilring 15 entfernt werden kann, wie es der radialen Höhe der Wulst 4 entspricht, kommen die Halterippenabschnitte 19 außer Eingriff mit der Wulst 4. Würde die Halterippe 14 eine konstante, kreisförmige Innenkontur aufweisen, würde sie bei einer derartigen Öffnungsweite der Spannmittel 16 immer noch die Wulst 4 formschlüssig hintergreifen, nämlich jeweils mit den Enden der beiden Halterippenabschnitte 19 an den Enden der beiden Teilringe 15.

Die Lockerung der Spannmittel 16 bewirkt nämlich eine Vergrößerung des Abstands der Halterippenabschnitte 19 lediglich in Längsrichtung der Schrauben in den Spannmitteln 16, nicht jedoch eine zirkumferent gleichmäßige Abstandsvergrößerung der Halterippe 14 von der Wulst 4. Dadurch, dass die Innenkontur der Halterippe 14 nahe den Spannmitteln 16 radial vergrößert ist, kommt auch in diesen beiden Bereichen die Halterippe 14 mit ihrem Umfang vergleichsweise früh außer Eingriff mit der Wulst 4, so dass die vormontierte Anordnung bereits nach einem vergleichsweise geringen Verstellweg der Spannmittel 16 erreicht wird und der Haltering 6 in Längsrichtung über das zweite Rohr 3 und dessen Wulst 4 hinweg bewegt werden kann.

Für die Herstellung der Rohrverbindung 1 bedeutet dies, dass der Haltering 6 in der vormontierten Anordnung der Teilringe 15 auf das zweite Rohr 3 aufgeschoben werden kann, bis sich die Halterippe 14 hinter der Wulst 4 des zweiten Rohrs 3 befindet. Anschließend können die Spannmittel 16 gespannt werden, wobei bereits ein vergleichsweise kurzer Verstellweg der Spannmittel 16 ausreicht, um die Teilringe 15 aus der vormontierten Anordnung in die montierte Anordnung zu bewegen.

Fig. 6 zeigt eine Rohrverbindung 1 im Längsschnitt, wobei in dem Hohlraum 31 eine Dichtung 21 angeordnet ist. Im Unterschied zu dem als O-Ring ausgestalteten Dichtring 5 der Fig. 1 ist die Dichtung 21 als Profildichtung ausgestaltet. Sie liegt im Inneren des Haltering 6 auf dem ersten Rohr 2 auf und erstreckt sich axial außen bis auf die Wulst 4 des zweiten Rohrs 3. Durch das Verspannen der Spannmittel 16 wird die Dichtung 21 auf die äußere Oberfläche des ersten und zweiten Rohrs 2, 3 gepresst. Die Dichtung 21 kann somit erstens eine flüssigkeitsdichte Barriere bilden, wobei das Material der Dichtung 21 an die Medien angepasst ist, welche durch die Rohrverbindung 1 geleitet werden, beispielsweise ölhaltige Abwässer oder dergleichen. Bei dem dargestellten Ausführungsbeispiel ist die Dichtung 21 als Dichtungsring ausgestaltet, welcher beispielsweise einen Elastomerwerkstoff oder ein Polyamid aufweist, sie kann abweichend davon jedoch auch durch eine Vergussmasse z.B. ein zweikomponentiges Harz gebildet werden, die in den Hohlraum 31 injiziert wird, der zwischen den beiden Rohren 2 und 3 sowie dem Haltering 6 geschaffen ist. Weiterhin kann die Dichtung 21 eine mechanische Funktion in Art einer Wurzelsperre erfüllen, welche das Eindringen von Wurzeln in den Innenraum der Rohrverbindung 1 verhindert, insbesondere in das Innere der Rohre 2 und 3. Dafür können gespritzte, vorgefertigte Elemente vorgesehen sein, bspw. aus Polyamid oder dergleichen, die bei hohen Spannkräften verformbar sind und somit besonders wirkungsvoll einen Wurzeleinwuchs verhindern können.

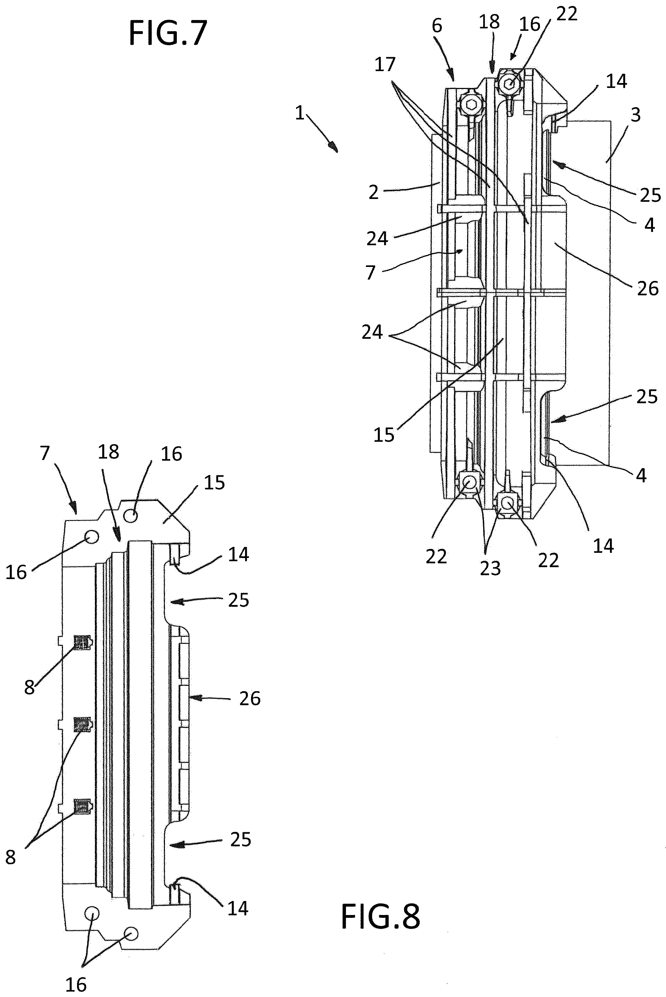

Die Fig. 7 bis 14 zeigen teils separat, teils als Bestandteil einer Rohrverbindung 1 Ausführungsbeispiele von Halteringen 6, die grundsätzlich den zuvor beschriebenen Halteringen 6 gleichen und sich in einigen Details von diesen unterscheiden.

Die Spannmittel 16 sind bei den dargestellten Ausführungsbeispielen als Schrauben 22 ausgestaltet, die gemäß Fig. 7 mit Vierkantmuttern 23 zusammenwirken, welche verdrehsicher im Haltering 6 angeordnet sind. Abweichend von dem dargestellten Ausführungsbeispiel können auch Sechskantmuttern verwendet werden, und die Vierkant- oder Sechskantmuttern können wahlweise selbstsichernd ausgestaltet sein. In Fig. 7 ist die Rohrverbindung 1 von außen ersichtlich. Die insgesamt vier Spannmittel 16 sind ebenso erkennbar wie eine dritte Aussteifungsrippe 17 am freien Ende des Krallenabschnitts 7. Dort, wo im Krallenabschnitt 7 die Mulden 9 vorgesehen sind, befinden sich am äußeren Umfang des Krallenabschnitts 7 Vorsprünge 24. Die Vorsprünge 24 sind jeweils mit einer eigenen, kurzen Versteifungsrippe versehen, die längs über den jeweiligen Vorsprung 24 verläuft und die gewünschte Anpresskraft der Haltekrallen 8 auf die jeweilige Rohroberfläche auch ohne einen Spannring 10 sicherstellt, der ansonsten außen umlaufend angeordnet wäre und auf die als Druckstücke wirkenden Vorsprünge 24 einwirken würde. Zusätzlich kann jedoch auch ein Spannring außen um die Vorsprünge 24 umlaufend angeordnet sein, er wirkt in diesem Fall über die kurzen Rippen und die Vorsprünge 24 auf die Haltekrallen 8 ein.

Fig. 8 zeigt eine Ansicht auf die radial innere Seite eines Teilrings 15 des Halterings 6 von Fig. 7.

Der Haltering 6 kann zur Schaffung einer Rohrverbindung 1 in einer einzigen Rohrleitung genutzt werden, wie dies in Fig. 7 erkennbar ist. Besonders geeignet ist der Haltering aber auch zur Verwendung in einem besonders beengten Einbauraum, wie später noch näher erläutert wird. Dazu weist der Haltering 6 in seinem zweiten Abschnitt Unterbrechungen 25 auf. Bei dem dargestellten Ausführungsbeispiel weist jeder der beiden Teilringe 15 jeweils zwei Unterbrechungen 25 auf. Die Unterbrechungen 25 erstrecken sich erstens in die Halterippe 14, so dass sie jeweils in axialer Richtung eine Fehlstelle schaffen, als auch zweitens in radialer Richtung, so dass sie jeweils außen in einer Mantelfläche 26 eine Fehlstelle schaffen. Die Mantelfläche 26 umgibt radial außen die Halterippe 14 und verbindet den zweiten Abschnitt des Halterings 6, in dem sich die Halterippe 14 befindet, mit dem Krallenabschnitt 7.

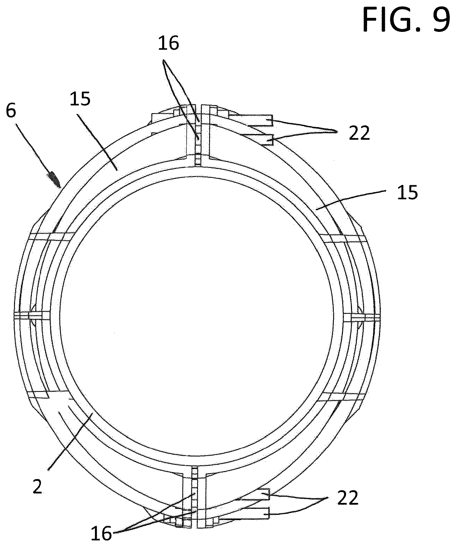

Aus Fig. 9 sind die beiden Teilringe 15 in ihrer montierten Anordnung ersichtlich, in welcher sie einen geringen Abstand zueinander aufweisen und den beiden Rohren 2 und 3 eng anliegen. Abweichend von dem dargestellten Ausführungsbeispiel kann der Haltering 6 auch aus mehr als zwei Teilringen 15 bestehen. Durch den schmalen verbleibenden Abstand zwischen den beiden Teilringen 15 sind die als Schrauben 22 ausgestalteten Spannmittel 16 jeweils in den Spalten erkennbar, die sich zwischen den beiden Teilringen 15 ergeben.

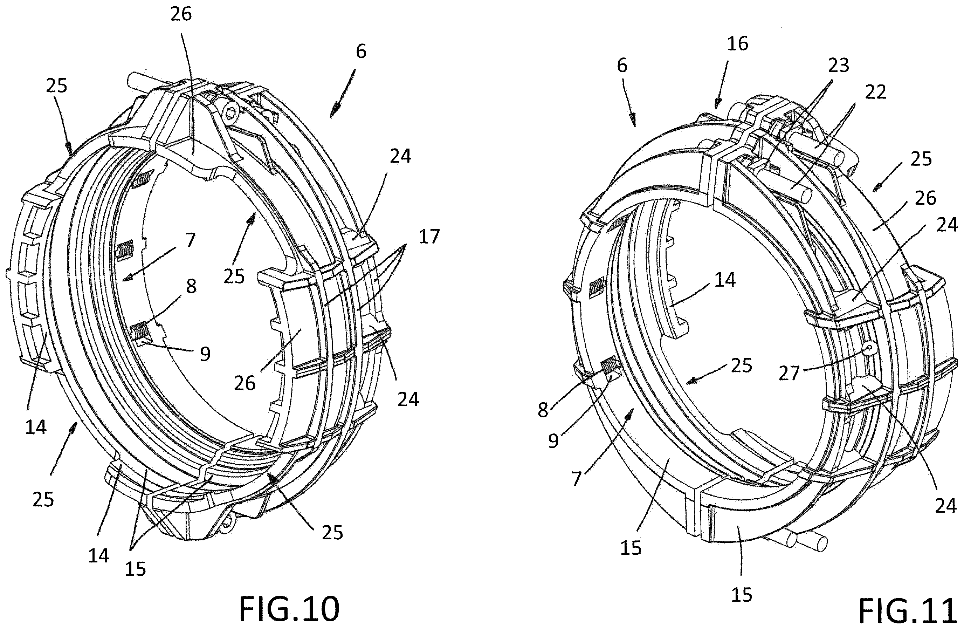

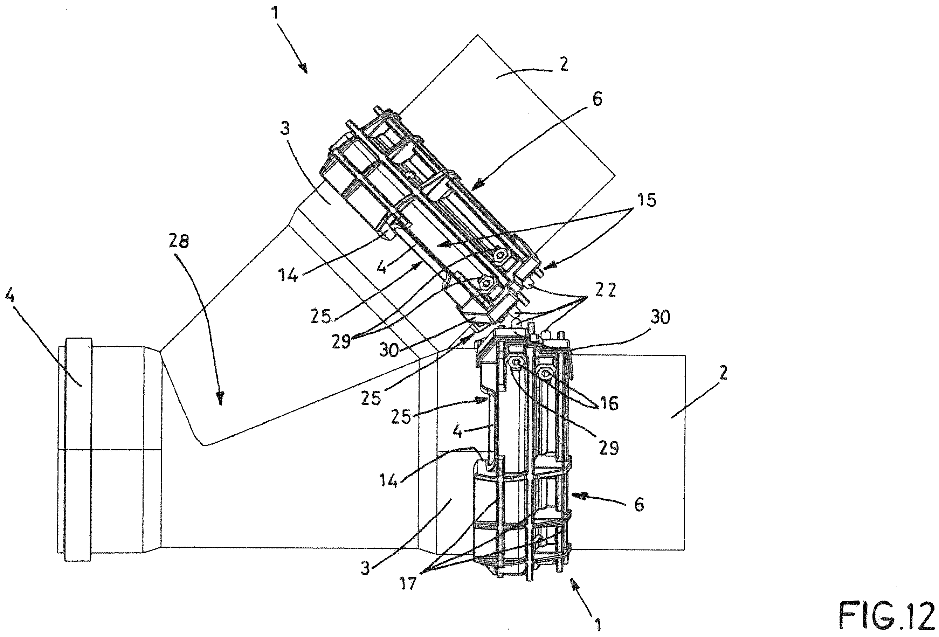

Die Fig. 10 und 11 zeigen die beiden Teilringe 15 in ihrer montierten Anordnung und aus unterschiedlichen perspektivischen Blickrichtungen. In Fig. 11 ist eine Einfüllöffnung 27 dargestellt, die zum Einfüllen einer Dichtungsmasse genutzt werden kann, welche hinsichtlich der Dichtungswirkung den Dichtungsring 5 ergänzt, und / oder welche als Wurzelsperre dienen kann. Die Dichtungsmasse kann einen Hohlraum 31 vollständig ausfüllen, in dem sich auch der Dichtungsring 5 oder eine als Profildichtung ausgestaltete Dichtung 21 befindet und der in den Fig. 12 bis 14 nicht ersichtlich ist. Der Hohlraum 31 erstreckt sich in axialer Richtung der Rohrverbindung 1 sowohl über das erste Rohr 2 als auch über das zweite Rohr 3. Er wird radial nach außen hin und an seinen beiden axialen Enden von dem Haltering 6 begrenzt, und radial nach innen wird er durch die beiden Rohre 2 und 3 begrenzt.

In den Fig. 12 bis 14 sind an einem Rohrabzweig zwei Rohrverbindungen 1 dargestellt, die jeweils als zugfeste Rohrverbindung ausgestaltet sind. Ein Formteil aus Kunststoff ist als ein so genannter Abzweig 28 ausgestaltet, der einen geradlinig durchlaufenden Rohrabschnitt sowie einen davon abzweigenden Rohrabschnitt aufweist. Alle drei Enden des Abzweigs 28 sind jeweils als Muffe ausgestaltet, in die ein Spitzende eines Rohrs eingesteckt werden kann, und sie weisen jeweils eine umlaufende Wulst 4 auf, die im Inneren des Abzweigs 28 jeweils eine Sicke bildet, in die eine Dichtung eingelegt werden kann. Im Bereich der beiden Rohrverbindungen 1 bildet der Abzweig 28 jeweils das zweite Rohr 3. Zwischen der geradlinig durchlaufenden Rohrleitung und der winklig daran anschließenden Rohrleitung ergibt sich ein Zwickel, in welchem die benachbarten Wülste 4 einen geringen Abstand zueinander aufweisen. Um auch in diesem Zwickel kollisionsfrei montiert werden zu können, werden die Halteringe 6 der Fig. 7 bis 11 verwendet, die für diesen besonders beengten Einbauraum besonders geeignet sind.

Aus Fig. 12 ist ersichtlich, dass die beiden Halteringe 6 sich gegenseitig im Bereich jeweils einer Unterbrechung 25 durchdringen, was deren Montage auch in dem sehr engen Zwickel ermöglicht. Dadurch, dass jeder Haltering 6 an seinem Umfang verteilt vier Unterbrechungen 25 aufweist, kann je nach Einbausituation jeder Haltering 6 in vier unterschiedlichen Drehwinkelstellungen eine Durchdringung mit dem jeweils anderen Haltering 6 ermöglichen. Auf diese Weise kann jeder Haltering 6 so ausgerichtet werden, dass seine Spannmittel 16 gut zugänglich sind, z. B. um ein Schraubwerkzeug an die Schraubenköpfe der Schrauben 22 anzusetzen.

Die Halteringe 6 der Fig. 12 bis 14 weisen im Bereich der Spannmittel 16 Vertiefungen auf, die zur verdrehsicheren Aufnahme von Sechskantmuttern ausgestaltet sind, aber wahlweise auch die Aufnahme von Schraubenköpfen der Schrauben 22 ermöglichen. Die Ausrichtung der als Spannmittel 16 verwendeten Schrauben 22 kann daher so gewählt werden, dass je nach Einbausituation des Halterings 6 die Schraubenköpfe gut erreichbar sind. Da die Schraubenköpfe außen rund sind und einen zentralen Kraftangriff in Form eines Innensechskants aufweisen, können sie innerhalb der Vertiefungen problemlos gedreht werden, um die Spannmittel 16 wahlweise zu lösen oder zu spannen. Laschen 29 ragen über die Schraubenköpfe und über die Muttern in axialer Richtung der Spannmittel 16 hinaus und sind in der Art umgebogen, dass sowohl die Schraubenköpfe als auch die Muttern in ihren jeweiligen Vertiefungen gegen axiale Verschiebungen gesichert sind und somit in ihrer jeweiligen Vertiefung gehalten sind.

Die Teilringe 15 der in Fig. 12 dargestellten Halteringe 6 weisen jeweils zwei unterschiedliche Enden auf, die zur Bildung einer Kammer dienen. Zu diesem Zweck weist jeweils eines der beiden Enden einen Kragen 30 auf, der als eine Kammerwand, zusammen mit den Rohroberflächen, die ebenfalls als Kammerwände dienen, einen Aufnahmeraum schafft, in den das jeweils andere Ende des benachbarten Teilrings 15 eintaucht, welches ebenfalls eine Wand der Kammer bildet. Ein Schlitz, der sich ohne den Kragen 30 zwischen zwei benachbarten Teilringen 15 ergeben und in radialer Richtung von den Rohroberflächen nach außen erstrecken würde wie in Fig. 9 ersichtlich, wird durch den Kragen 30 verschlossen. Die Spannmittel 16 erstrecken sich jeweils durch eine solche Kammer und da sie beispielsweise mit dem dargestellten Schraubenkopf und der gegenüberliegenden Mutter den Kammerwänden außen mit erheblichem Druck anliegen, dichten sie die Bohrungen, durch die sich die Schrauben 22 erstrecken, und somit die Kammer ab und verhindern das Austreten einer Dichtmasse aus der Kammer, wenn der Dichtungsring 5 oder die Dichtung 21 der Rohrverbindung 1 durch eine Vergussmasse geschaffen wird, die in den Hohlraum 31 zwischen dem Haltering 6 und den Rohroberflächen injiziert wird.

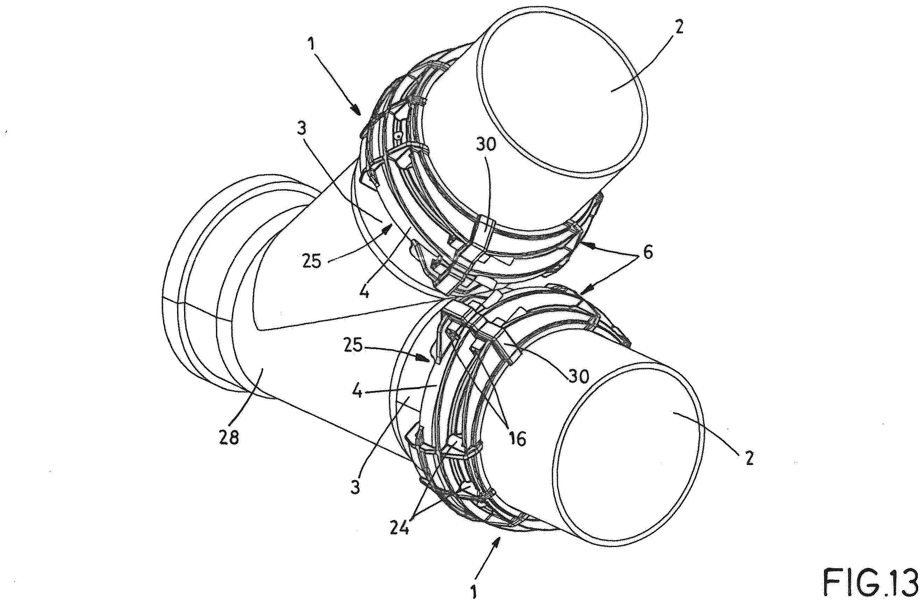

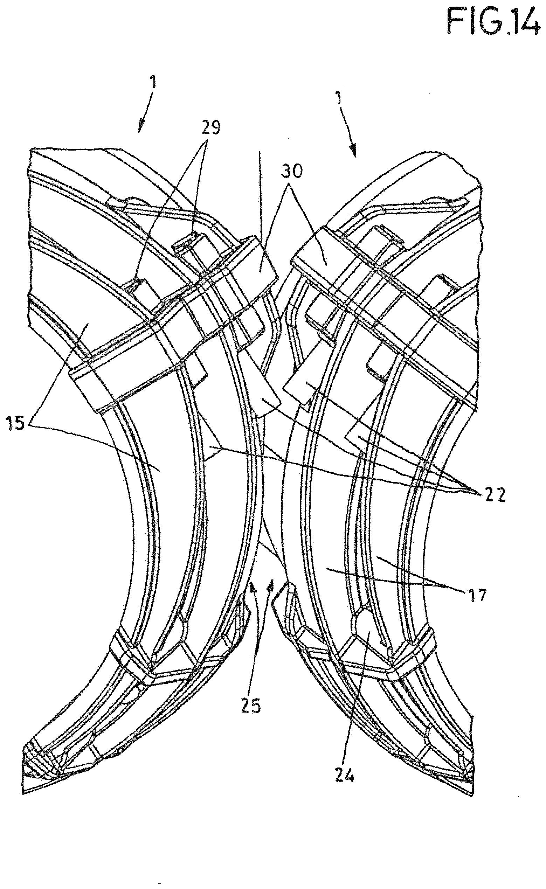

Fig. 14 zeigt in einem größeren Maßstab als Fig. 12 und 13 einen Blick in den Zwickel. Es ist erkennbar, dass sich die beiden Halteringe 6 im Bereich ihrer Aussparungen 25 durchdringen und so eine Montage auf sehr engem Raum ermöglichen. Auch bei dem Haltering der Fig. 12 bis 14 sind die Vorsprünge 24 jeweils mit einer eigenen, kurzen Versteifungsrippe versehen, die längs über den jeweiligen Vorsprung 24 verläuft und die gewünschte Anpresskraft der Haltekrallen 8 auf die jeweilige Rohroberfläche auch ohne einen Spannring 10 sicherstellt. Zusätzlich kann jedoch auch ein Spannring außen um die Vorsprünge 24 umlaufend angeordnet sein, er wirkt in diesem Fall über die kurzen Rippen und die Vorsprünge 24 auf die Haltekrallen 8 ein. Insbesondere können in diesem Fall die kurzen Rippen jeweils eine oder zwei nach außen ragende Noppen aufweisen, um den Spannring 10 gegen Abrutschen zu sichern und auf der jeweiligen kurzen Rippe zu führen.

### Bezugszeichen:

- 1: Rohrverbindung
- 2: Erstes Rohr
- 3: Zweites Rohr
- 4: Wulst
- 5: Dichtungsring
- 6: Haltering
- 7: Krallenabschnitt
- 8: Haltekralle
- 9: Mulde
- 10: Spannring
- 11: Spannschraube
- 12: Druckstück
- 14: Halterippe
- 15: Teilring
- 16: Spannmittel
- 17: Aussteifungsrippe
- 18: Absatz
- 19: Halterippenabschnitt
- 20: Stützrippe
- 21: Dichtung
- 22: Schraube
- 23: Vierkantmutter
- 24: Vorsprung
- 25: Unterbrechung
- 26: Mantelfläche
- 27: Einfüllöffnung
- 28: Abzweig
- 29: Lasche
- 30: Kragen
- 31: Hohlraum

## Patentansprüche

1. Zugfeste Rohrverbindung (1),
mit einem ersten Rohr (2), das ein Spitzende aufweist, welches sich in ein Muffenende eines zweiten Rohres (3) erstreckt,
wobei das zweite Rohr (3) eine umlaufende Wulst (4) aufweist,
und mit einem Haltering (6),
welcher die Wulst (4) des zweiten Rohres (3) in der Art übergreift, dass der Haltering (6) in axialer Richtung an dem zweiten Rohr (3) gegen abziehende Kräfte formschlüssig gesichert ist,
wobei der Haltering (6) einen Krallenabschnitt (7) aufweist, welcher sich bis über das erste Rohr (2) erstreckt,
und wobei in dem Krallenabschnitt (7) wenigstens eine in die Oberfläche des ersten Rohrs (2) eindringende Haltekralle (8) in der Art angeordnet ist, dass das erste Rohr (2) gegen abziehende Kräfte formschlüssig gesichert ist, wobei der Haltering (6) aus wenigstens zwei Teilringen (15) gebildet ist, die sich jeweils über einen Teilumfang des Halterings (6) erstrecken,
und wobei zwei benachbarte Teilringe (15) durch Spannmittel (16) miteinander verbunden sind,
**dadurch gekennzeichnet,**
**dass** die Haltekralle (8) ein Gewinde aufweist und sich in axialer Richtung des ersten Rohrs (2) erstreckt.

2. Rohrverbindung (1) nach Anspruch 1,
**dadurch gekennzeichnet,**
**dass** die Spannmittel als Spannring (10) ausgestaltet sind, und dass außen um den Krallenabschnitt (7) der Spannring (10) verläuft, dessen Umfang veränderlich ist,
und **dass** entweder die Haltekralle (8) nach außen über den Krallenabschnitt (7) hinausragt
oder ein Druckstück (12) zwischen dem Spannring (10) und der Haltekralle (8) in der Art angeordnet ist, dass bei einer Umfangsverringerung des Spannrings (10) ein punktueller, radial nach innen wirkender Druck auf die Haltekralle (8) erzeugbar ist.

3. Rohrverbindung (1) nach Anspruch 2,
**dadurch gekennzeichnet,**
**dass** das Druckstück (12) als nach innen ragender Vorsprung des Spannrings (10) ausgestaltet ist.

4. Rohrverbindung (1) nach Anspruch 2,
**dadurch gekennzeichnet,**
**dass** das Druckstück (12) als nach außen ragender Vorsprung des Krallenabschnitts (7) ausgestaltet ist.

5. Rohrverbindung (1) nach einem der vorhergehenden Ansprüche,
**dadurch gekennzeichnet,**
**dass** der Krallenabschnitt (7) eine Mulde (9) aufweist, die radial nach innen mündet und in welche die Haltekralle (8) eingelegt ist.

6. Rohrverbindung (1) nach einem der vorhergehenden Ansprüche,
**dadurch gekennzeichnet,**
**dass** die Haltekralle (8) als Madenschraube ausgestaltet ist.

7. Rohrverbindung (1) nach einem der vorhergehenden Ansprüche,
**dadurch gekennzeichnet,**
**dass** das zweite Rohr (3) als Doppelmuffe ausgestaltet ist, die an ihren beiden Enden die Aufnahme jeweils eines Spitzendes ermöglicht.

8. Rohrverbindung (1) nach einem der vorhergehenden Ansprüche,
**dadurch gekennzeichnet,**
**dass** die beiden Rohre (2, 3) aus Kunststoff bestehen.

9. Rohrverbindung (1) nach einem der vorhergehenden Ansprüche,
**dadurch gekennzeichnet,**
**dass** mehrere Haltekrallen (8) um den Umfang des Krallenabschnitts (7) verteilt angeordnet sind.

10. Rohrverbindung (1) nach einem der vorhergehenden Ansprüche,
**dadurch gekennzeichnet,**
**dass** benachbarte Teilringe (15) mit zwei unterschiedlich ausgestalteten Enden aneinander grenzen,
und eines der beiden unterschiedlichen Enden zur Bildung einer Kammer in der Art dient, dass es einen Kragen (30) aufweist, der zusammen mit der Rohroberfläche und dem benachbarten Teilring (15) einen Aufnahmeraum schafft, durch den sich das Spannmittel zu dem erwähnten benachbarten Teilring erstreckt.

11. Rohrverbindung (1) nach einem der vorhergehenden Ansprüche,
**dadurch gekennzeichnet,**
**dass** der Haltering (6) die Wulst (4) des zweiten Rohres (3) mittels einer nach innen ragenden Halterippe (14) übergreift, die der Haltering (6) aufweist,
wobei jeder Teilring (15) einen Halterippenabschnitt (19) aufweist,
und wobei die Teilringe (15) in einer vormontierten Anordnung einen ersten Abstand zueinander aufweisen und zwischen der ersten Anordnung und einer zweiten, montierten Anordnung beweglich sind, in welcher sie einen zweiten Abstand zueinander aufweisen, der geringer ist als der erste Abstand, und in welcher sie durch Spannmittel (16) zusammengehalten sind,
und **dass** die Halterippenabschnitte (19) sich jeweils unterschiedlich weit radial nach innen erstrecken, derart, dass die Halterippe (14) eine von einem Kreisrund abweichende Innenkontur aufweist und an den Enden der Halterippenabschnitte (19), wo jeweils ein Teilring (15) einem anderen Teilring (15) benachbart ist, die Halterippe (14) einen größeren Innendurchmesser aufweist als im umfangsmäßigen Abstand von diesem Ende.

## Claims

1. Tensile strength pipe coupling (1),
with a first pipe (2) having a tip end that extends into a socket end of a second pipe (3),
wherein the second pipe (3) has a peripheral bead (4), and with a retaining ring (6),
which engages the bead (4) of the second pipe (3) in such a way that the retaining ring (6) is secured in a form-fitting manner in the axial direction on the second pipe (3) against pulling-off forces,
wherein the retaining ring (6) has a claw portion (7) which extends over the first pipe (2),
and wherein at least one holding claw (8) penetrating into the surface of the first pipe (2) is arranged in the claw portion (7) in such a way that the first pipe (2) is secured in a form-fitting manner against pulling-off forces,
wherein the retaining ring (6) is formed from at least two partial rings (15), each of which extends over a partial periphery of the retaining ring (6),
and wherein two adjacent partial rings (15) are connected to each other by clamping means (16),
**characterized in that**
the holding claw (8) has a thread and extends in the axial direction of the first pipe (2).

2. Pipe coupling (1) according to Claim 1,
**characterized in that**
the clamping means are designed as a clamping ring (10), and **in that** the clamping ring (10), the periphery of which is variable, runs around the outside of the claw portion (7),
and **in that** either the holding claw (8) protrudes outwards beyond the claw portion (7)
or a pressure piece (12) is arranged between the clamping ring (10) and the holding claw (8) in such a way that, when the periphery of the clamping ring (10) is reduced, a punctiform pressure acting radially inwards is exerted on the holding claw (8).

3. Pipe coupling (1) according to Claim 2,
**characterized in that**
the pressure piece (12) is designed as an inwardly protruding projection of the clamping ring (10).

4. Pipe coupling (1) according to Claim 2,
**characterized in that**
the pressure piece (12) is designed as an outwardly protruding projection of the claw portion (7).

5. Pipe coupling (1) according to one of the preceding claims,
**characterized in that**
the claw portion (7) has a recess (9) which opens radially inwards and into which the holding claw (8) is inserted.

6. Pipe coupling (1) according to one of the preceding claims,
**characterized in that**
the holding claw (8) is designed as a grub screw.

7. Pipe coupling (1) according to one of the preceding claims,
**characterized in that**
the second pipe (3) is designed as a double socket, which allows a tip end to be received at each of its two ends.

8. Pipe coupling (1) according to one of the preceding claims,
**characterized in that**
the two pipes (2, 3) are made of plastic.

9. Pipe coupling (1) according to one of the preceding claims,
**characterized in that**
a plurality of holding claws (8) are distributed around the periphery of the claw portion (7).

10. Pipe coupling (1) according to one of the preceding claims,
**characterized in that**
adjacent partial rings (15) with two differently designed ends are adjacent to each other,
and one of the two different ends serves to form a chamber in such a way that it has a collar (30) which, together with the pipe surface and the adjacent partial ring (15), creates a receiving space through which the clamping means extends to the aforementioned adjacent partial ring.

11. Pipe coupling (1) according to one of the preceding claims,
**characterized in that**
the retaining ring (6) engages the bead (4) of the second pipe (3) by means of an inwardly projecting retaining rib (14) which the retaining ring (6) has, wherein each partial ring (15) has a retaining rib portion (19),
and wherein the partial rings (15) have a first distance between them in a pre-assembled arrangement and are movable between the first arrangement and a second, assembled arrangement, in which they have a second distance between them that is smaller than the first distance and in which they are held together by clamping means (16),
and **in that** the retaining rib portions (19) each extend radially inwards to different degrees, such that the retaining rib (14) has an inner contour that deviates from a circle and, at the ends of the retaining rib portions (19), where one partial ring (15) is adjacent to another partial ring (15), the retaining rib (14) has a larger inner diameter than at the peripheral distance from this end.

## Revendications

1. Raccord de tuyau (1) résistant à la traction,
avec un premier tuyau (2), qui comporte une extrémité en pointe, laquelle s'étend dans une extrémité en manchon d'un deuxième tuyau (3),
le deuxième tuyau (3) comportant un bourrelet (4) périphérique,
et avec une bague de maintien (6),
laquelle s'étend sur le bourrelet (4) du deuxième tuyau (3) de telle manière que la bague de maintien (6) est bloquée par complémentarité de forme à l'encontre de forces de retrait sur le deuxième tuyau (3) dans la direction axiale,
la bague de maintien (6) comportant une section de griffe (7), qui s'étend jusqu'au-delà du premier tuyau (2),
et au moins une griffe de maintien (8) s'enfonçant dans la surface du premier tuyau (2) étant disposée dans la section de griffe (7) de telle manière que le premier tuyau (2) est bloqué par complémentarité de forme à l'encontre de forces de retrait,
la bague de maintien (6) étant formée à partir d'au moins deux bagues partielles (15), qui s'étendent respectivement au-delà d'une périphérie partielle de la bague de maintien (6),
et deux bagues partielles (15) adjacentes étant reliées l'une à l'autre par des moyens de serrage (16),
**caractérisé en ce**
**que** la griffe de maintien (8) comporte un filetage et s'étend dans la direction axiale du premier tuyau (2).

2. Raccord de tuyau (1) selon la revendication 1,
**caractérisé en ce**
**que** les moyens de serrage sont configurés comme une bague de serrage (10), et que la bague de serrage (10), dont la périphérie varie, s'étend à l'extérieur autour de la section de griffe (7),
et **que** soit la griffe de maintien (8) dépasse vers l'extérieur au-delà de la section de griffe (7)
soit une pièce de pression (12) est disposée entre la bague de serrage (10) et la griffe de maintien (8) de telle manière que lors d'une réduction de périphérie de la bague de serrage (10), une pression ponctuelle agissant radialement vers l'intérieur peut être produite sur la griffe de maintien (8).

3. Raccord de tuyau (1) selon la revendication 2, **caractérisé en ce**
**que** la pièce de pression (12) est configurée comme une partie faisant saillie dépassant vers l'intérieur de la bague de serrage (10).

4. Raccord de tuyau (1) selon la revendication 2,
**caractérisé en ce**
**que** la pièce de pression (12) est configurée comme une partie faisant saillie dépassant vers l'extérieur de la section de griffe (7).

5. Raccord de tuyau (1) selon l'une des revendications précédentes,
**caractérisé en ce**
**que** la section de griffe (7) comporte un manchon (9), qui débouche radialement vers l'intérieur et dans lequel la griffe de maintien (8) est placée.

6. Raccord de tuyau (1) selon l'une des revendications précédentes,
**caractérisé en ce**
**que** la griffe de maintien (8) est configurée comme une vis sans tête.

7. Raccord de tuyau (1) selon l'une des revendications précédentes,
**caractérisé en ce**
**que** le deuxième tuyau (3) est configuré comme un double manchon, qui permet sur ses deux extrémités de recevoir respectivement une extrémité en pointe.

8. Raccord de tuyau (1) selon l'une des revendications précédentes,
**caractérisé en ce**
**que** les deux tuyaux (2, 3) sont constitués de manière plastique.

9. Raccord de tuyau (1) selon l'une des revendications précédentes,
**caractérisé en ce**
**que** plusieurs griffes de maintien (8) sont disposées de manière répartie autour de la périphérie de la section de griffe (7).

10. Raccord de tuyau (1) selon l'une des revendications précédentes,
**caractérisé en ce**
**que** des bagues partielles (15) adjacentes se jouxtent les unes les autres par deux extrémités configurées différemment,
et une des deux extrémités différentes sert à former une chambre de telle manière qu'elle comporte un rebord (30), qui créée conjointement avec la surface de tuyau et la bague partielle (15) adjacente un espace de réception, à travers lequel s'étend le moyen de serrage vers la bague partielle adjacente mentionnée.

11. Raccord de tuyau (1) selon l'une des revendications précédentes,
**caractérisé en ce**
**que** la bague de maintien (6) s'étend sur le bourrelet (4) du deuxième tuyau (3) au moyen d'une nervure de maintien (14) dépassant vers l'intérieur, que la bague de maintien (6) comporte,
chaque bague partielle (15) comportant une section (19) de nervure de maintien,
et les bagues partielles (15) présentant dans un agencement prémonté une première distance les unes par rapport aux autres et étant mobiles entre le premier agencement et un deuxième agencement monté, dans lequel elles présentent les unes par rapport aux autres une deuxième distance qui est inférieure à la première distance, et dans lequel elles sont retenues par des moyens de serrage (16),
et **que** les sections de nervure de maintien (19) s'étendent radialement vers l'intérieur avec un éloignement respectivement différent de telle manière que la nervure de maintien (14) comporte un contour intérieur divergeant d'une forme ronde circulaire et, sur les extrémités des sections de nervure de maintien (19), où respectivement une bague partielle (15) est adjacente à une autre bague partielle (15), la nervure de maintien (14) présente un diamètre intérieur plus grand qu'à la distance en périphérie par rapport à ladite extrémité.
